# EUROPÄISCHE PATENTSCHRIFT

(11) **EP 0 497 141 B1**
(45) Veröffentlichungstag und Bekanntmachung des Hinweises auf die Patenterteilung: **05.06.1996**
(21) Anmeldenummer: 92100572.4
(22) Anmeldetag: 15.01.1992
(51) Int. Cl.: G02B 6/12, H01S 3/00, G02B 6/42, G02B 6/28

(54) **Optischer Isolator**
Optical isolator
Isolateur optique

(30) Priorität: 30.01.1991 DE 4102643
(43) Veröffentlichungstag der Anmeldung: 05.08.1992
(73) Patentinhaber: Alcatel SEL Aktiengesellschaft, D-70435 Stuttgart (DE); ALCATEL N.V., NL-1077 XX Amsterdam (NL)
(72) Erfinder: Weissert, Herbert, W-7144 Asperg (DE)
(74) Vertreter: Pohl, Herbert, Dipl.-Ing

(56) Entgegenhaltungen:
- PATENT ABSTRACTS OF JAPAN vol. 8, no. 192 (P-298)(1629) 4. September 1984 ; & JP-A-59 081 618
- PATENT ABSTRACTS OF JAPAN vol. 6, no. 67 (E-104)(945) 28. April 1982 ; & JP-A-57 010 284
- APPLIED PHYSICS LETTERS, Bd. 37, Nr. 8, Oktober 1980, NEW YORK US, Seiten 688-690; D. K. MANSFIELD et al.:'A lossless, passive isolator for optically pumped far-infrared lasers'

## Beschreibung

Die Erfindung bezieht sich auf einen optischen Isolator nach dem Oberbegriff des Patentanspruchs 1.

Optische Übertragungssysteme enthalten Laser, insbesondere Halbleiterlaser, die hochkohärentes, einmodiges Licht erzeugen.

Um die Einmodigkeit des emittierten Laserlichts Zu erhalten, darf das Laserlicht nicht wieder in den Laser reflektiert werden, weil dadurch Modenwechsel und Leistungsschwankungen verursacht werden. Dadurch wird die Kohärenzlänge so stark herabgesetzt, daß das Laserlicht in interferometrischen Anordnungen oder Modulatoren nur noch schlecht Zu gebrauchen ist. Um die Reflexion zu unterdrücken, werden optische Isolatoren eingesetzt.

Aus der Druckschrift "Faraday-Isolatoren" der Fa. Newport GmbH, Darmstadt, o.J., sind optische Isolatoren bekannt, die auf der Ausnutzung des Faraday-Effekts beruhen.

In einem Isolatorkristall wird die Polarisationsebene eines Lichtstrahls um 45° gedreht, wenn der Isolatorkristall einem geeignet gewählten Magnetfeld ausgesetzt wird. Da die Drehung der Polarisationsebene unabhängig davon erfolgt, ob es sich um das eingestrahlte oder das reflektierte Licht handelt, wird die Polarisationsebene des reflektierten Lichts um 90° gegenüber dem eingestrahlten gedreht. Sind ein eingangsseitiger und ein ausgangsseitiger Polarisator vorhanden, deren Polarisationsrichtungen miteinander ebenfalls einen Winkel von 45° bilden, läßt sich das zurückgestrahlte Licht sehr stark unterdrücken.

Der bekannte optische Isolator hat allerdings den Nachteil, daß er aufwendig herzustellen ist: ein Kristall, das den Faraday-Effekt zeigt, muß einem konstanten und abgestimmten Magnetfeld ausgesetzt werden; zusammen mit zwei Polarisatoren muß der Kristall im Strahlengang des Lichts, das aus einem eingangsseitigen Lichtwellenleiter in den Isolator eintritt und in einem ausgangsseitigen Lichtwellenleiter den Isolator wieder verläßt, justiert werden.

Aus einem Aufsatz von D.K. Mansfield et al in "Applied Physics Letters" Band 37, Nr. 8, Oktober 1980, Seiten 688-690 ist ein optischer Isolator bekannt, der ausgangsseitig ein Viertelwellenlängenplättchen besitzt und in dessen Eingang linear polarisiertes Licht eingekoppelt wird, dessen Polarisationsebene mit den Hauptachsen des Viertelwellenlängenplättchens einen Winkel von 45° bildet.

Auch dieser optische Isolator erfordert viel Aufwand für Aufbau und Justage.

Es ist die Aufgabe der Erfindung, einen einfach aufgebauten optischen Isolator zu schaffen.

Die Aufgabe wird, wie in Patentanspruch 1 angegeben, gelöst.

Vorteilhaft ist, daß der optische Isolator auf einem Substrat, z.B. einem aus einem Lithiumniobat-Einkristall bestehenden Substrat oder einem Glassubstrat angeordnet ist. Darüber hinaus ist der optische Isolator mit beliebigen anderen optischen Bauelementen, z.B. Polarisatoren, Modulatoren, optischen Schaltern, integrierbar.

Weiterbildungen der Erfindung ergeben sich aus den Unteransprüchen.

Im folgenden wird die Erfindung anhand von lediglich einzelne Ausführungswege darstellenden Zeichnungen näher erläutert. Es zeigen:
- Fig. 1: die Draufsicht eines optischen Isolators,
- Fig. 2: die Seitenansicht des optischen Isolators,
- Fig. 3: die Draufsicht des optischen Isolators mit einer Kreuzung,
- Fig. 4: die Draufsicht des optischen Isolators gemäß Fig. 1 als Teil eines Fabry-Pérot-Interferometers,
- Fig. 5: die Draufsicht des optischen Isolators gemäß Fig. 3 als Teil eines Michelson-Interferometers und
- Fig. 6: die Draufsicht des optischen Isolators gemäß Fig. 3 als Teil eines Sagnac-Interferometers.

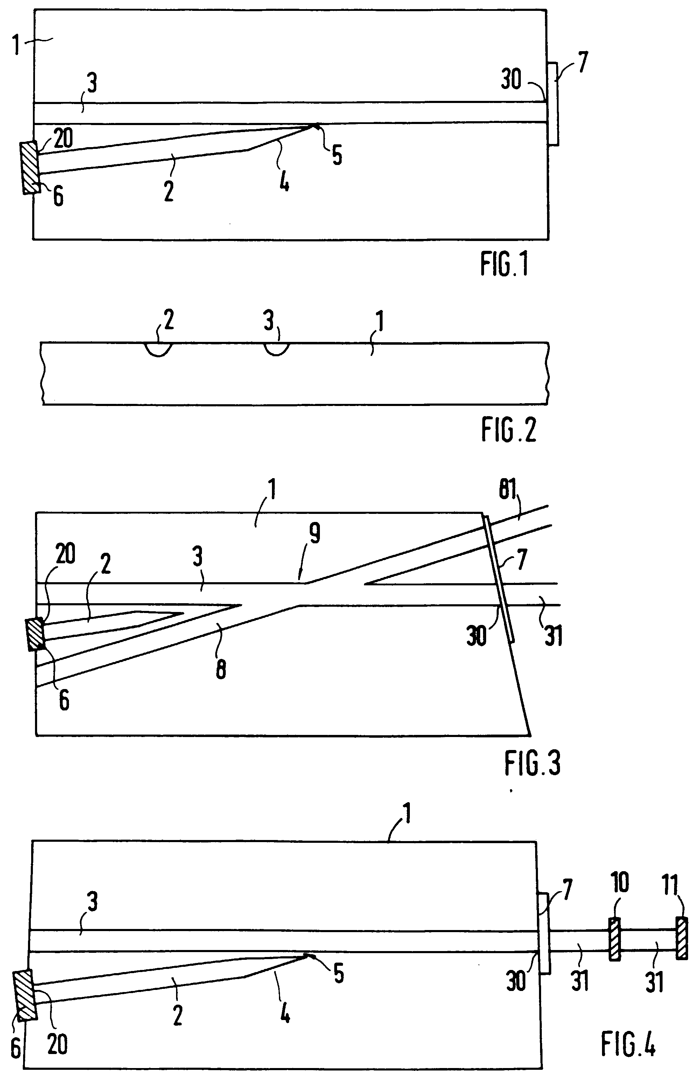

Auf der Oberfläche und unter der Oberfläche eines Substrats 1 (Fig. 1) sind ein erster Lichtwellenleiter 2 und ein zweiter Lichtwellenleiter 3 vorhanden. Während der erste Lichtwellenleiter 2 von der linken Seitenkante des Substrats 1 bis zur Mitte der Oberfläche reicht und dort, zu einer Spitze 4 sich verjüngend, endet, erstreckt sich der zweite Lichtwellenleiter 3 von der linken bis zur rechten Seitenkante des Substrats 1. Der erste Lichtwellenleiter 2 und der zweite Lichtwellenleiter 3 berühren einander nicht, vielmehr ist zwischen der Spitze 4 des ersten Lichtwellenleiters 2 und dem zweiten Lichtwellenleiter 3 ein schmaler Substratbereich 5 vorhanden.

Der erste Lichtwellenleiter 2 hat seinen Anfang an einem funktionsgemäßen Eingang 20, der zweite Lichtwellenleiter 3 hat sein Ende an einem funktionsgemäßen Ausgang 30.

Die Bezeichnungen "funktionsgemäßer Eingang 20" und "funktionsgemäßer Ausgang 30" geben einen Hinweis darauf, wie der optische Isolator zu nutzen ist: bei der funktionsgemäßen Anwendung des optischen Isolators wird Licht aus einer Laserlichtquelle an dem funktionsgemäßen Eingang 20 in den ersten Lichtwellenleiter 2 eingespeist. An dem funktionsgemäßen Ausgang 30 wird es aus dem zweiten Lichtwellenleiter 3 ausgestrahlt. Darüber hinaus läßt sich auch an der linken Seitenkante des Substrats 1 Licht in den zweiten Lichtwellenleiter 3 einspeisen. Beim Betrieb des optischen Isolators dient der funktionsgemäße Ausgang 30 gleichzeitig wieder als Eingang für zurückreflektiertes, funktionsgemäß, d.h. gemäß der Funktion des optischen Isolators, nicht nutzbares Licht.

An dem funktionsgemäßen Eingang 20 ist ein Polarisator 6 so angeordnet, daß das in ihn von der Laserlichtquelle eingestrahlte, noch nicht polarisierte Licht in einer zu der durch die Längsachsen des ersten Lichtwellenleiters 2 und des zweiten Lichtwellenleiters 3 aufgespannten Ebene koplanaren Ebene elektrisch linear polarisiert wird. Gemäß Fig. 1 ist der Polarisator 6 seitlich auf dem Substrat 1 vor dem ersten Lichtwellenleiter 2 integriert.

Wenn der Polarisator 6 auf dem Substrat 1 integriert ist, kann er z.B. aufgeklebt oder durch Aufdampfen einer dünnen metallischen Schicht oberhalb des ersten Lichtwellenleiters 2 entstanden sein.

Der Polarisator 6 kann sich auch außerhalb des Substrats 1 zwischen diesem und der Laserlichtquelle befinden. Dann muß das Licht zwischen dem Polarisator 6 und dem zweiten Lichtwellenleiter 3 einen polarisationserhaltenden Lichtwellenleiter durchlaufen, oder es ist mindestens in unmittelbarer Nähe zu dem Substrat 1 ein Mittel zur Drehung der Polarisationsebene vorhanden, damit gewährleistet ist, daß das Licht im Bereich des Substrats 1, wie oben beschrieben, elektrisch linear polarisiert ist.

Aus der Spitze 4 tritt das Licht in den zweiten Lichtwellenleiter 3 über. Das Ende des ersten Lichtwellenleiters 2 bildet somit zusammen mit dem Substratbereich 5, wo das aus dem ersten Lichtwellenleiter 2 kommende Licht in den zweiten Lichtwellenleiter 3 gelangt, eine optische Weiche aus. Aus dem zweiten Lichtwellenleiter 3 wird es in Vorwärtsrichtung durch ein Viertelwellenlängenplättchen 7 geleitet. Eine der optischen Hauptachsen des Viertelwellenlängenplättchens 7 bildet dabei einen Winkel von 45° mit der Oberfläche des Substrats 1, d.h. mit der Ebene, in der das einfallende Licht polarisiert ist. Nach Durchlaufen des Viertelwellenlängenplättchens 7 ist das Licht dann zirkular polarisiert. Wenn das zirkular polarisierte Licht an irgendeiner Fläche reflektiert wird und das Viertelwellenlängenplättchen 7 ein zweites Mal durchstrahlt, ist es wieder linear polarisiert, jedoch senkrecht zur Polarisationsrichtung des einfallenden Lichts. Das Viertelwellenlängenplättchen 7 besteht vorzugsweise aus Glimmer und ist seitlich auf dem Substrat 1 aufgeklebt.

Der erste Lichtwellenleiter 2 und der zweite Lichtwellenleiter 3 (Fig. 2) haben einen nicht-kreisförmigen Querschnitt, z.B. einen halbkreis- oder halbellipsenförmigen Querschnitt. Aufgrund dieser Form erfährt senkrecht zur Oberfläche des Substrats 1 polarisiertes Licht beim Übertritt aus dem ersten Lichtwellenleiter 2 oder aus dem zweiten Lichtwellenleiter 3 in den jeweils anderen durch den Substratbereich 5 eine viel stärkere Dämpfung als parallel zu ihr polarisiertes Licht. Daher wird Licht, nachdem es das Viertelwellenlängenplättchen 7 ein erstes Mal durchlaufen hat und zurückreflektiert wird, nur noch mit einer hohen Dämpfung in den ersten Lichtwellenleiter 2 gelangen, und daher kann nur das aus dem ersten Lichtwellenleiter 2 kommende, an dem funktionsgemäßen Ausgang 30 an der dem zweiten Lichtwellenleiter 3 zugewandten Seite des Viertelwellenlängenplättchens 7 reflektierte Licht in den ersten Lichtwellenleiter 2 zurückgestrahlt werden. Dieses wird jedoch hauptsächlich aus dem zweiten Lichtwellenleiter 3 an der linken Seitenkante des Substrats 1 ausgestrahlt; dieses funktionsgemäß nicht nutzbare Licht läßt sich beispielsweise einer absorbierenden Substanz zuführen oder für Meßzwecke verwenden.

Für den Fall, daß die Laserlichtquelle bereits linear polarisiertes Licht ausstrahlt oder daß im Übertragungsweg des Lichtes bereits eine Einrichtung vorhanden ist, durch die das Licht linear polarisiert wird, braucht an dem funktionsgemäßen Eingang 20 des optischen Isolators der Polarisator 6 nicht vorgesehen zu werden. Zur optimalen Einkopplung des Lichts in den ersten Lichtwellenleiter 2 ist es nur erforderlich, das Substrat 1 so zu drehen, daß die Ebene, in der das Licht elektrisch linear polarisiert ist, koplanar zu der durch die Längsachsen des ersten Lichtwellenleiters 2 und des zweiten Lichtwellenleiters 3 aufgespannten Ebene ist, d.h. ebenfalls koplanar zu der Oberfläche des Substrats 1 ist.

Der erste Lichtwellenleiter 2 und der zweite Lichtwellenleiter 3 lassen sich, wenn z.B. das Substrat 1 aus Lithiumniobat besteht, durch Eindiffundieren einer Titanverbindung in das Lithiumniobat herstellen, d.h. der erste Lichtwellenleiter 2 und der zweite Lichtwellenleiter 3 bestehen aus titandotiertem Lithiumniobat. Der erste Lichtwellenleiter 2 und der zweite Lichtwellenleiter 3 lassen sich auch in einem Glassubstrat herstellen; dies geschieht ebenfalls durch Eindiffundieren einer Titanverbindung oder einer anderen Substanz, so daß der erste Lichtwellenleiter 2 und der zweite Lichtwellenleiter 3, die dadurch entstanden sind, einen höheren Brechungsindex aufweisen als das sie umgebende Substrat 1. Der erste Lichtwellenleiter 2 und der zweite Lichtwellenleiter 3 sind monomodale polarisationserhaltende Lichtwellenleiter. Sie sind so angeordnet, daß ihre Längsachsen einen spitzen Winkel miteinander bilden. Jeder spitze Winkel zwischen den Längsachsen des ersten Lichtwellenleiters 2 und des zweiten Lichtwellenleiters 3 ist möglich, besonders geeignet ist ein Winkel von weniger als 3°. Allgemein gilt, daß der Winkel zwischen dem ersten Lichtwellenleiter 2 und dem zweiten Lichtwellenleiter 3 geeignet in Abhängigkeit von der Apertur des ersten Lichtwellenleiters 2 und des zweiten Lichtwellenleiters 3 und ihrer Grenzwellenlänge (cut off) zu wählen ist.

Vorteilhaft ist es, den optischen Isolator als Teil in einem Interferometer (Fig. 3) zu verwenden, bei dem der zweite Lichtwellenleiter 3 mit einem dritten Lichtwellenleiter 8 eine Kreuzung 9 bildet. Die Kreuzung 9 liegt in Übertragungsrichtung des aus dem ersten Lichtwellenleiter 2 kommenden Lichts hinter der optischen Weiche. Wenn nun Licht aus dem ersten Lichtwellenleiter 2 in den zweiten Lichtwellenleiter 3 eintritt und außerdem Licht in dem dritten Lichtwellenleiter 8 übertragen wird, interferiert das Licht in der Kreuzung 9. Das dadurch entstandene Interferenzlicht wird hinter dem Viertelwellenlängenplättchen 7, das hier ebenfalls hinter dem dritten Lichtwellenleiter 8 angeordnet ist, in Lichtwellenleiter 31, 81 weiter übertragen. In dem zweiten Lichtwellenleiter 3 und dem dritten Lichtwellenleiter 8 kann auch je ein gesondertes Viertelwellenlängenplättchen enthalten sein. Auf diese Weise läßt sich der optische Isolator in Interferometern verwenden.

In besonders vorteilhafter Weise läßt sich, - jedoch ohne die optische Kreuzung 9 gemäß Fig. 3 -, mit dem optischen Isolator gemäß Fig. 1 ein Interferometer (Fig. 4), d.h. ein Fabry-Pérot-Interferometer, aufbauen. Dazu ist in dem zweiten Lichtwellenleiter 31 in Übertragungsrichtung des aus dem ersten Lichtwellenleiter 2 kommenden Lichts hinter dem Viertelwellenlängenplättchen 7 ein teildurchlässiger Spiegel 10 enthalten, und am Abschluß des zweiten Lichtwellenleiters 3 ist ein ausschließlich reflektierender Spiegel 11 vorgesehen. Die Strecke zwischen den einander zugewandten Oberflächen der Spiegel 10, 11 bildet einen optischen Resonator.

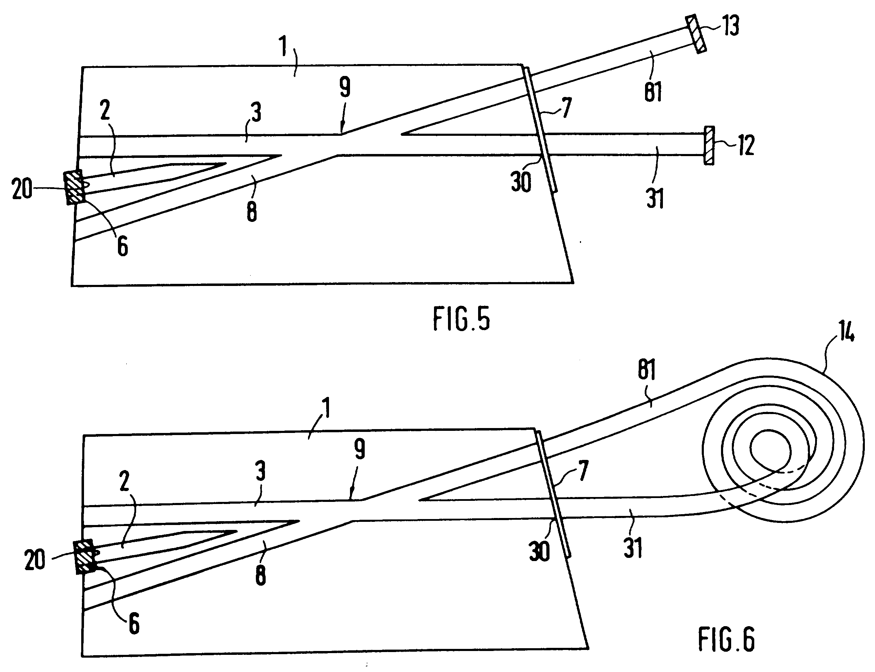

In einem anderen vorteilhaften, auf der Anordnung gemäß Fig. 3 beruhenden Interferometer (Fig. 5) ist in Übertragungsrichtung des aus dem Lichtwellenleiter 2 kommenden Lichts hinter den Lichtwellenleitern 31, 81 je ein reflektierender Spiegel 12 bzw. 13 vorhanden. Dieses Interferometer ist ein Michelson-Interferometer. Dabei ist hinter dem zweiten Lichtwellenleiter 3 und dem dritten Lichtwellenleiter 8 entweder - wie in Fig. 5 dargestellt - dasselbe Viertelwellenlängenplättchen 7 oder hinter dem zweiten Lichtwellenleiter 3 und dem dritten Lichtwellenleitern 8 je ein einzelnes Viertelwellenlängenplättchen vorhanden.

Besonders vorteilhaft ist auch ein weiteres, nach der Anordnung gemäß Fig. 3 aufgebautes Interferometer (Fig. 6). Es ist ein Sagnac-Interferometer. Dabei sind die Lichtwellenleiter 31 und 81 durch eine Schleife 14 miteinander verbunden und gehen ineinander über. Die Schleife 14 kann viele Windungen haben.

## Patentansprüche

1. Optischer Isolator mit mindestens einem funktionsgemäßen Ausgang (30), an dem ein Viertelwellenlängenplättchen (7) angeordnet ist, und mindestens einem funktionsgemäßen Eingang (20) zur Einkopplung von ankommendem, linear polarisiertem Licht in das Viertelwellenlängenplättchen, wobei die Polarisationsebene des Lichts einen Winkel von 45° mit den Hauptachsen des Viertelwellenlängenplättchens bildet,
**dadurch gekennzeichnet,** daß der optische Isolator mindestens teilweise auf einem Substrat (1) ausgebildet ist, daß er einen ersten (2) und einen zweiten Lichtwellenleiter (3) aufweist, die in dem Substrat (1) integriert sind und die eine optische Weiche bilden, daß der erste Lichtwellenleiter (2) an dem funktionsgemäßen Eingang (20) seinen Anfang hat, zu dem zweiten Lichtwellenleiter (3) in einem spitzen Winkel verläuft, sich zu einer Spitze (4) verjüngt und von dem zweiten Lichtwellenleiter (3) durch einen schmalen Substratbereich (5) getrennt ist, so daß damit die optische Weiche gebildet wird, daß der zweite Lichtwellenleiter an dem funktionsgemäßen Ausgang (30) sein Ende hat und daß das Viertelwellenlängenplättchen daran so angeordnet ist, daß seine optischen Hauptachsen einen Winkel von 45° mit der Substratebene bilden, wobei in den Eingang (20) linear polarisiertes Licht einzukoppeln ist, dessen Polarisationsebene parallel zur Substratebene ist.

2. Optischer Isolator nach Anspruch 1,
**dadurch gekennzeichnet,** daß an dem funktionsgemäßen Eingang (20) ein Polarisator (6) so angeordnet ist, daß durch ihn Licht in Richtung zu der optischen Weiche übertragbar ist, das parallel zur Substratebene linear polarisiert ist.

3. Optischer Isolator nach Anspruch 1 oder 2, dadurch gekennzeichnet daß das Viertelwellenlängenplättchen (7) seitlich auf dem Substrat (1) aufgeklebt ist.

4. Optischer Isolator nach einem der Ansprüche 1 bis 3, dadurch gekennzeichnet, daß das Substrat (1) aus Lithiumniobat besteht und der erste (2) und der zweite Lichtwellenleiter (3) aus titandotiertem Lithiumniobat bestehen.

5. Optischer Isolator nach einem der Ansprüche 1 bis 3, dadurch gekennzeichnet, daß das Substrat (1) aus Glas besteht und der erste (2) und der zweite Lichtwellenleiter (3) einen höheren Brechungsindex aufweisen als das sie umgebende Substrat (1).

6. Optischer Isolator nach Anspruch 5, dadurch gekennzeichnet, daß der erste (2) und der zweite Lichtwellenleiter (3) aus titandotiertem Glas bestehen.

7. Optischer Isolator nach einem der vorstehenden Ansprüche, dadurch gekennzeichnet, daß der Winkel zwischen den Längsachsen des ersten (2) und des zweiten Lichtwellenleiters (3) weniger als 3° beträgt.

## Claims

1. Optical isolator having at least one functional output (30) at which a quarter-wave plate (7) is disposed, and at least one functional input (20) for coupling incoming plane-polarized light into the quarter-wave plate, the polarization plane of the light forming an angle of 45° with the principal axes of the quarter-wave plate, characterized in that the optical isolator is at least partially formed on a substrate (1), in that it has a first (2) and a second optical waveguide (3) which are integrated in the substrate (1) and which form an optical splitter, in that the first optical waveguide (2) starts at the functional input (20), runs at an acute angle to the second optical waveguide (3), tapers to a point (4) and is separated from the second optical waveguide (3) by a narrow substrate region (5) so that the optical splitter is consequently formed, in that the second optical waveguide terminates at the functional output (30) and in that the quarter-wave plate is disposed thereon in such a way that its optical principal axes form an angle of 45° with the substrate plane, in which arrangement plane-polarized light whose plane of polarization is parallel to the substrate plane is to be coupled into the input (20).

2. Optical isolator according to Claim 1, characterized in that a polarizer (6) is disposed at the functional input (20) in such a way that light which is plane-polarized parallel to the substrate plane can be transmitted through it in the direction of the optical splitter.

3. Optical isolator according to Claim 1 or 2, characterized in that the quarter-wave plate (7) is glued laterally onto the substrate (1).

4. Optical isolator according to one of Claims 1 to 3, characterized in that the substrate (1) is composed of lithium niobate and the first (2) and the second optical waveguide (3) are composed of titanium-doped lithium niobate.

5. Optical isolator according to one of Claims 1 to 3, characterized in that the substrate (1) is composed of glass and the first (2) and the second optical waveguide (3) have a higher refractive index than the substrate (1) surrounding them.

6. Optical isolator according to Claim 5, characterized in that the first (2) and the second optical waveguide (3) are composed of titanium-doped glass.

7. Optical isolator according to one of the preceding claims, characterized in that the angle between the longitudinal axes of the first (2) and of the second optical waveguide (3) is lees than 3°.

## Revendications

1. Isolateur optique comportant au moins une sortie (30) en conformité avec sa fonction, au niveau de laquelle est disposée une lame quart d'onde (7), et au moins une entrée (20) en conformité avec sa fonction destinée à la modulation de lumière entrante, polarisée de façon linéaire dans la lame quart d'onde, le plan de polarisation de la lumière formant un angle de 45° avec les axes principaux de la lame quart d'onde, caractérisé en ce que l'isolateur optique est formé au moins partiellement sur un substrat (1), en ce qu'il présente un premier (2) et un deuxième guide d'ondes lumineuses (3), qui sont intégrés dans le substrat (1) et qui forment un séparateur optique, en ce que le premier guide d'ondes lumineuses (2) commence à la première entrée (20) en conformité avec sa fonction, passe au deuxième guide d'ondes lumineuses (3) dans un angle aigu, se rétrécit à une pointe (4) et est séparé du deuxième guide d'ondes lumineuses (3) par une étroite zone de substrat (5), de sorte qu'ainsi le séparateur optique est formé, en ce que le deuxième guide d'ondes lumineuses se termine à la sortie (30) en conformité avec sa fonction et en ce que la lame quart d'onde y est disposée de telle sorte que ses axes optiques principaux forment un angle de 45° avec le plan de substrat, auquel cas de la lumière polarisée de façon linéaire doit être modulée dans l'entrée (20), dont le plan de polarisation est parallèle au plan du substrat.

2. Isolateur optique selon la revendication 1, caractérisé en ce que à l'entrée (20) en conformité avec sa fonction, un polariseur (6) est disposé de telle sorte que de la lumière peut être transmise à travers lui dans le sens du séparateur optique, qui est polarisée de façon linéaire parallèlement au plan du substrat.

3. Isolateur optique selon la revendication 1 ou 2, caractérisé en ce que la lame quart d'onde (7) est collée latéralement sur le substrat (1).

4. Isolateur optique selon l'une des revendications 1 à 3, caractérisé en ce que le substrat (1) se compose de niobate de lithium et que le premier (2) et le deuxième (3) guide d'ondes lumineuses se composent de niobate de lithium dopé au titane.

5. Isolateur optique selon l'une des revendications 1 à 3, caractérisé en ce que le substrat (1) se compose de verre et le premier (2) et le deuxième (3) guide d'ondes lumineuses (3) présentent un indice de réfraction plus élevé que le substrat les entourant (1).

6. Isolateur optique selon la revendication 5, caractérisé en ce que le premier (2) et le deuxième (3) guide d'ondes lumineuses se composent de verre dopé au titane.

7. Isolateur optique selon l'une des revendications précédentes, caractérisé en ce que l'angle situé entre les axes longitudinaux du premier (2) et du deuxième (3) guide d'ondes lumineuses (3) est inférieur à 3°.
